# EUROPEAN PATENT SPECIFICATION

(11) **EP 4 325 866 B1**
(45) Date of publication and mention of the grant of the patent: **12.08.2026**
(21) Application number: 21946739.6
(22) Date of filing: 27.09.2021
(51) Int. Cl.: H04N 19/132, H04N 19/17, H04N 21/2343, H04N 21/4402

(54) **METHOD AND SYSTEM FOR VR IMAGE COMPRESSION AND TRANSMISSION**
VERFAHREN UND SYSTEM ZUR KOMPRESSION UND ÜBERTRAGUNG VON VR-BILDERN
PROCÉDÉ ET SYSTÈME DE COMPRESSION ET DE TRANSMISSION D'IMAGE VR

(30) Priority: 22.06.2021 CN 202110692510
(43) Date of publication of application: 21.02.2024
(73) Proprietor: Qingdao Pico Technology Co., Ltd., Qingdao, Shandong 266000 (CN)
(72) Inventor: YU, Dongzhuang, Beijing University Of Aeronautics And Astronautics, No.393 Songling Road, Laoshan District Qingdao, Shandong 266000 (CN); CUI, Xinyu, Beijing University Of Aeronautics And Astronautics, No.393 Songling Road, Laoshan District Qingdao, Shandong 266000 (CN); WU, Jian, Beijing University Of Aeronautics And Astronautics, No.393 Songling Road, Laoshan District Qingdao, Shandong 266000 (CN)
(74) Representative: Marks & Clerk LLP
(86) International application number: PCT/CN2021/121005
(87) International publication number: WO 2022/267256

(56) References cited:
- WO-A1-2017/138994
- CN-A- 107 040 794
- CN-A- 108 322 727
- CN-A- 108 337 497
- CN-A- 110 572 656
- JP-A- 2003 153 263
- JP-A- 2017 058 794
- US-A1- 2018 033 405
- US-A1- 2021 037 207

## Description

### Technical Field

The present disclosure relates to the field of virtual reality technology, and in particular, to a Virtual Reality (VR) image compression transmission method and system.

### Background

Due to the advancement of technology and the diversification of market demand, virtual reality systems are becoming increasingly common in many applications such as computer games, health and safety, industry and education and training. For example, mixed virtual reality systems are being integrated into mobile communication devices, game consoles, personal computers, movie theaters, theme parks, university laboratories, student classrooms, exercise and fitness rooms in hospitals, and other parts of life.

The core of VR streaming and VR live streaming is to encode the VR images obtained from a remote location and send the encoded VR images to the local area, where the received contents are unpacked, restructured, decoded and then displayed. Therefore, it is important to ensure the resolution of the images while reducing the traffic required for transmission. At present, mainly h264 and h265 encoding compression is used for videos. Although with good effect, there is a problem of low transmission efficiency due to large volume and high resolution of images, affecting the operation experience of VR live streaming or VR streaming.

Therefore, there is an urgent need for a VR image compression transmission method and system that reduces the image and video transmission volume and increases the video transmission rate.

In particular, US 2018/033405A1 proposes a display system that divides a screen into regions and applies a different set of rendering/encoding parameters to each region. The system applies a first set of parameters to a first region that is being viewed by a fovea of an eye of a user. The system may also apply a second set of parameters to a second region that is being viewed by a parafovea of the eye, and apply a third set of parameters to a third region that is being viewed by the area of the eye outside of the parafovea. The first set of parameters are selected to yield relatively high image quality, while the second set of parameters are yield intermediate quality, and the third set of parameters yield lower quality. As a result, the second region and the third region can be rendered, encoded, and transmitted with less computing power and less bandwidth.

JP 2017058794A discloses an information processing apparatus for controlling a screen displayed on a wearable information display device, which includes : setting means of setting a plurality of points or areas for the screen from a point of sight of a user with the information display device; storage means of storing the points or areas set by the setting means; and adjustment means of adjusting a wearing state of the information display device by use of the points or areas stored in the storage means when the user wears the information display device.

US 2021/037207A1 discloses methods and systems for determining an image resource allocation for displaying content within a display area. An image or data capture device associated with a display device may capture an image of a space associated with the user or capture data related to other objects in the space. The viewing distance between the user and the display area (e.g., the display device) may be monitored and processed to determine and/or adjust the image resource allocation for content displayed within the display area. User movement, including eye movement, may also be monitored and processed to determine and/or adjust the image resource allocation for content displayed within the display area.

### Summary

In view of the above problems, an objective of the embodiments of the present disclosure is to provide a VR image compression transmission method and system, which can solve the problem that low transmission efficiency due to large volume and high resolution of images affects the operation experience of VR live streaming or VR streaming, when h264 and h265 encoding compression with good effect is used for videos.

The invention is set out in the appended set of claims.

The embodiments of the present disclosure provide a VR image compression transmission method and system. A video image to be sent by a server is obtained and localized compression is performed on the video image according to a compression range to obtain a first compressed video image. Video encoding is performed on the first compressed video image to obtain a transmission video image, and then the transmission video is transmitted to a client and video decoding is performed on the transmission video image to restore the transmission video image into a second compressed video image. The second compressed video image is decompressed to obtain a display video image. By using d3d or opengl computing as the medium, the image data within the compression range of the edge is compressed by an image shader program to reduce the overall image resolution by compressing the resolution of the edge of the video image, so as to reduce the image volume and improve the transmission rate, thus improving the stability of VR live streaming and VR streaming.

### Brief Description of the Drawings

Fig. 1 is a schematic flowchart of a VR image compression transmission method according to the embodiments of the present disclosure.
Fig. 2 is a schematic diagram of a compression range involved in the VR image compression transmission method according to the embodiments of the present disclosure.
Fig. 3 is a schematic diagram of a VR image compression transmission system according to the embodiments of the present disclosure.

### Detailed Description of the Embodiments

At present, mainly h264 and h265 encoding compression is used for videos. Although with good effect, there is a problem of low transmission efficiency due to large volume and high resolution of images, affecting the operation experience of VR live streaming or VR streaming.

In view of the above problems, the embodiments of the present disclosure provide a VR image compression transmission method and system, the details of which is described in subsequent embodiments with drawings.

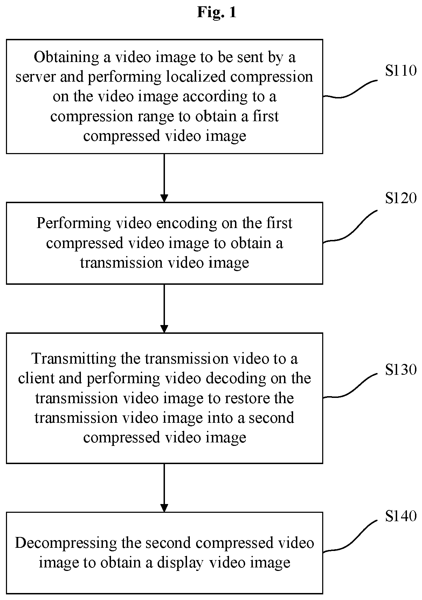

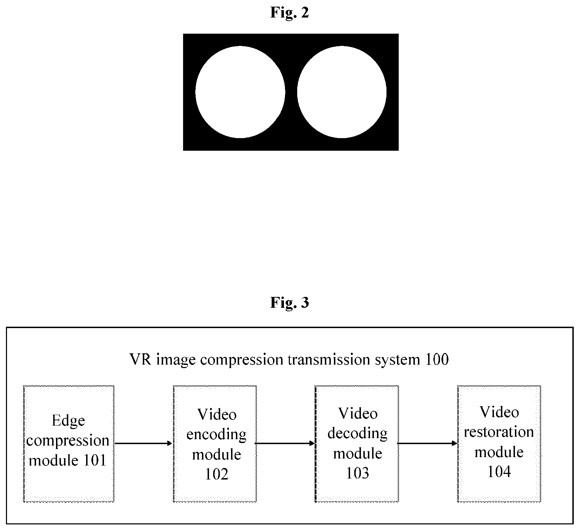

To illustrate the VR image compression transmission method and system provided in the embodiments of the present disclosure, Fig. 1 provides an exemplary illustration of a VR image compression transmission method according to the embodiments of the present disclosure. Fig. 2 provides an exemplary illustration of a VR image compression transmission system according to the embodiments of the present disclosure.

The description of the following exemplary embodiments is in fact merely illustrative and is in no way intended as any limitation on the present disclosure and the application or use of the present disclosure. Techniques and apparatus known to those having ordinary skill in the relevant field may not be discussed in detail, but where appropriate, the techniques and apparatus should be considered as part of the description.

As shown in Fig. 1, the embodiments of the present disclosure provide a VR image compression transmission method, comprising:
S1: obtaining a video image to be sent by a server and performing localized compression on the video image according to a compression range to obtain a first compressed video image, wherein the compression range is determined by a transmission sample image;
S2: performing video encoding on the first compressed video image to obtain a transmission video image;
S3: transmitting the transmission video to a client and performing video decoding on the transmission video image to restore the transmission video image into a second compressed video image; and
S4: decompressing the second compressed video image to obtain a display video image.

As shown in Fig. 1, in operation S1, a video image to be sent by a server is obtained and localized compression is performed on the video image according to a compression range to obtain a first compressed video image, wherein the compression range is determined by a transmission sample image. Herein, an operation S0 of determining the compression range by the transmission sample comprises:
S01: enabling, through a guidance program, both eyes of a user to respectively correspond to the left lens barrel and the right lens barrel of a VR headset.
S02: capturing a transmission sample image marked with at least one blind range area, sent by the server, through the left lens barrel and the right lens barrel; and
S04: adjusting a size of the transmission sample image so that the at least one blind range area exits a field of view of the user.

A process of performing localized compression on the video image according to a compression range to obtain a first compressed video image comprises:
S11: performing area locking for the video image according to the compression range to divide the video image into an edge area and a center area;
S12: performing a preset multiplier compression sampling for the edge area by a first image shader program to obtain a compressed edge area, and performing a true sampling for the center area to obtain a center restoration area; and
S13: using the compressed edge area and the center restoration area as the first compressed video image.

In some exemplary implementations, as shown in Fig. 2, since the VR headset is designed to view a rectangular screen through near-circular left and right lens barrels, when the VR headset is worn normally, the edge of the rectangular screen is not visible (black part in the figure). The image of the edge part (black part) is visible only when the line of sight is shifted as far as possible or when the headset is moving sharply towards one side. In such a case, due to the abnormal line of sight or due to the rapid movement, it is difficult to view normally the display effect of the image of that part. Therefore, the overall image resolution can be reduced by compressing the resolution of the edge of the video image, thereby reducing the image volume. Therefore, the compression range is firstly determined by operation S0. In the embodiments, the video generator and sender is the server, and the VR headset is the client. After the server is connected to the client, the user is requested to wear the VR headset properly, with the guidance program of the client prompting the user to wear the headset normally, and to click the confirmation button of the VR headset after confirming that the headset has been worn properly via observation, so as to determine the left and right sides of the edge. Then, the server is preset with a left position and a right position. For example, for a video image with a resolution of 1920, it is preset that the positions of 480 and 1440 (1920-480=1440) are the left position and the right position respectively, and that the parts corresponding to 0-480 and 1440-1920 are rendered into solid red, and the other parts of the video image remain unchanged. The image is transmitted to the client for display and an original image resolution is recorded. At this point, the client prompts the user to click the button "+" or "-" to increase or decrease the size of the red area, and click a confirmation button when the red area is only a little visible or invisible and does not affect the overall image perception. The client sends the command "+" or "-" to the server, and the server adjusts the starting boundary of the red part according to the command until the user clicks the confirmation button, and records the left and right compression boundaries. For the upper and lower boundaries, the same process is repeated for confirmation, thereby obtaining the compressing range. That is, the red area finally confirmed in the embodiments is the compressing range. Subsequently, such compression range is used to perform the localized compression on the video image to be sent by the server to obtain a first compressed video image.

Furthermore, in the embodiments, the preset multiplier in operation S1 is 2 times. As an exemplary implementation of the embodiments, after the compression range is determined, a first image shader program of the image shader is written. In the embodiments, the first image shader program is a shader program which reconstructs the image via sampling. Taking a video image with a resolution of 1920*1920 as an example, assuming the left, right, top, and bottom compression boundaries are 480, when 2 times compression is adopted, the horizontal 0-480 part is the edge area, in which sampling is performed once every 2 pixels, where odd numbered points are sampled in the odd numbered rows, and even numbered points are sampled in the even numbered rows; and 480-1440 part is the center area, in which sampling is performed once every 1 pixel, i.e., true sampling is adopted. The first compressed video image formed after compression is reconstructed as a video image of 1440*1440, with the compressed left, right, top, and bottom edge area of 240, respectively, and the center area of 960 in the center uncompressed part. After processing, the first compressed video image becomes 0.5625 times of the original video image, and the volume is reduced significantly.

In the embodiment as shown in Fig. 1, while perform the operation S2 of performing video encoding on the first compressed video image to obtain a transmission video image, the method further comprises:
saving the video image and recording the compression range and a compression ratio of the first compressed video image in a customized information frame of the video image.

As an exemplary implementation, in the process of transmitting the first compressed video image formed in operation S1 to the client, it is needed to perform video encoding on the first compressed video image. In the embodiments, the video encoding is designed as h264 or h265 video encoding. If video encoding is performed for the first compressed video image to obtain, for example, a h264 or h265 video, both the boundary information (i.e., the compression range) and the compression ratio are recorded in the SEI (customized information) frame to facilitate the restoration of the video image at a later stage. Also, if the original image is saved, the boundary information and the compression ratio may be recorded in the same folder, or may be named according to a following rule when generating the beginning of a bitmap name: the original resolution_left and right boundary_left and right compression ratio_top and bottom boundary_top and bottom compression ratio. For example, the name may be 1920#1920_480_2_480_2_customized name.bmp.

As shown in Fig. 1, in operation S3, the transmission video is transmitted to a client and video decoding is performed on the transmission video image to restore the transmission video image into a second compressed video image, i.e., after performing video encoding on the first compressed video image with the edge area compressed and transmitting the video image to the client, video decoding is required to obtain the decoded second compressed video image. In the embodiments, the decoded second compressed video image is identical to the first compressed video image before video encoding, i.e., the second compressed video has a same resolution as the first compressed video to prevent video distortion.

As shown in Fig. 1, in operation S4, the second compressed video image is decompressed to obtain a display video image. The operation that the second compressed video image is decompressed to obtain a display video image comprises:
S41: obtaining a compressed part and an original part of the second compressed video image, wherein the compressed part is identical to the compressed edge area, and the original part is identical to the center restoration area;
S42: performing differential sampling for the compressed part by a second image shader program to restore the compressed part to a true edge area, and performing point-to-point sampling for the original part to obtain a true center area; and
S43: fitting the true edge area and the true center area to obtain the display video image.

In operation S4, the second compressed video image (equivalent to the first compressed video image) with the edge compressed is decompressed. In some exemplary implementations, in the real-time streaming or real-time live streaming, the boundary information (compression range) and the original image resolution has been recorded. For a stored decompressed file, such information can be extracted from the video stream SEI frame or from the image name. A second image shader program in the image shader needs to be written in order to achieve the decompression. In the embodiments, the second image shader program is a shader program which reconstructs the image via sampling. That is, for the compressed part, the pigmentation of the two points is extended based on the original image using difference sampling, i.e., the sampler is configured to perform difference sampling to restore the compressed part to the original size. For the original part (the uncompressed part of the image), the sampler is configured to perform point-to-point sampling. Both the first image shader program, which performs compression, and the second image shader program, which performs decompression, use opengl or d3d technology as the medium for invoking the shader program, thus ensuring the speed of operation.

Moreover, it should be noted that in the process of real-time streaming or live streaming, the user can adjust the size of the compression range (boundary information) at any time, and then the localized compression and decompression operations are performed for the localized compression according to the compression range according to operations S1 to S4, so that the transmission video is transmitted at a small resolution, improving the transmission rate and does not affect the image quality and resolution of the video image, and ensuring the quality and stability of real-time streaming or live streaming.

As described above, the embodiments of the present disclosure provide a VR image compression transmission method. A video image to be sent by a server is obtained and localized compression is performed on the video image according to a compression range to obtain a first compressed video image. Video encoding is performed on the first compressed video image to obtain a transmission video image, and then the transmission video is transmitted to a client and video decoding is performed on the transmission video image to restore the transmission video image into a second compressed video image. The second compressed video image is decompressed to obtain a display video image. By using d3d or opengl computing as the medium, the image data within the compression range of the edge is compressed by an image shader program to reduce the overall image resolution by compressing the resolution of the edge of the video image, so as to reduce the image volume and improve the transmission rate, thus improving the stability of VR live streaming and VR streaming.

As shown in Fig. 3, the embodiments of the present disclosure also provide a VR image compression transmission system 100, which is configured to implement the VR image compression transmission method as previously described, and comprises:
an edge compression module 101, configured to obtain a video image to be sent by a server and perform localized compression on the video image according to a compression range to obtain a first compressed video image, wherein the compression range is determined by a transmission sample image;
a video encoding module 102, configured to perform video encoding on the first compressed video image to obtain a transmission video image;
a video decoding module 103, configured to transmit the transmission video to a client and perform video decoding on the transmission video image to restore the transmission video image into a second compressed video image; and
a video restoration module 104, configured to decompress the second compressed video image to obtain a display video image.

The edge compression module 101 comprises an image shader.

A first image shader program is provided in the image shader, and the first image shader program is configured to perform a preset multiplier compression sampling for an edge area divided according to the compression range to obtain a compressed edge area.

An image shader is also comprised in the video restoration module 104, i.e., the video restoration module also comprises an image shader. The image shader also comprises a second image shader program. The second image shader program is configured to perform differential sampling for the compressed part of the second compressed video image to restore the compressed part to a true edge area, and perform point-to-point sampling for the original part of the second compressed video image to obtain a true center area, thereby obtaining a display video image. In this way, the video image sent by the server is fully restored for display, thereby improving the transmission rate without affecting the stability of the video image.

As can be seen by the above implementation, the embodiments of the present disclosure provide a VR image compression transmission system. the edge compression module 101 firstly obtains a video image sent by the server, and performs localized compression on the video image according to a compression range to obtain a first compressed video image, and then the video encoding module 102 performs video encoding on the first compressed video image to obtain a transmission video image, and then transmits the transmission video to a client; the video decoding module 103 performs video decoding on the transmission video image to restore the transmission video image into a second compressed video image, and then the video restoration module 104 decompresses the second compressed video image to obtain a display video image. By using d3d or opengl computing as the medium, the image data within the compression range of the edge is compressed by an image shader program to reduce the overall image resolution by compressing the resolution of the edge of the video image, so as to reduce the image volume and improve the transmission rate, thus improving the stability of VR live streaming and VR streaming.

The VR image compression transmission method and system provided in the embodiments of the present disclosure are described by way of example with reference to the accompanying drawings. However, it should be understood by the person having ordinary skill in the art that various improvements can be made to the above VR image compression transmission method and system proposed in the embodiments of the present disclosure without departing from the content of the embodiments of the present disclosure. Therefore, the scope of protection of the present disclosure should be determined by the content of the attached claims.

Specific examples in the embodiments may be made with reference to the examples described in the above embodiments and exemplary implementations. This embodiment will not be repeated herein.

Apparently, it should be understood by the person having ordinary skill in the art that the modules or operations of the embodiments of the present disclosure described above may be implemented with a generic computing device. They may be centralized on a single computing device, or distributed on a network of multiple computing devices. Or, they may be implemented with program code executable by the computing device. Therefore, they may be stored in a storage device to be executed by the computing device. In some cases, the operations shown or described may be executed in a different order than herein, or they may be implemented separately as individual integrated circuit modules, or multiple modules or operations thereof may be implemented as individual integrated circuit modules. In this way, the present disclosure is not limited to any particular combination of hardware and software.

### Industrial Applicability

As described above, the embodiments of the present disclosure provides a VR image compression transmission method, with the beneficial effects of reducing the overall image resolution by compressing the resolution of the edge of the video image, so as to reduce the image volume and improve the transmission rate, thus improving the stability of VR live streaming and VR streaming.

## Claims

1. A Virtual Reality, VR, image processing method performed by a server, comprising:
obtaining a video image to be sent by the server;
performing resolution localized compression on the video image according to a spatial compression range to obtain a first compressed video image, wherein the spatial compression range defines an edge area within the video image in which resolution is to be reduced and the spatial compression range is determined by a transmission sample image, which is an image marked with at least one blind range area whose size is adjustable by a command from a user of a client so that the at least one blind range area exits the field of view of the user;
performing (S120) video encoding on the first compressed video image to obtain a transmission video image; and
transmitting the transmission video image to the client,
wherein the performing resolution localized compression on the video image according to a spatial compression range to obtain a first compressed video image comprises:
dividing the video image into the edge area and a center area according to the spatial compression range;
subsampling the edge area with a preset subsampling factor by a first image shader program to reduce the resolution of the edge area, thereby obtaining a compressed edge area, and performing a point-to-point true sampling for the center area to obtain a center restoration area; and
using the compressed edge area and the center restoration area as the first compressed video image.

2. The VR image processing method according to claim 1, wherein a process of determining the spatial compression range by the transmission sample image comprises:
sending the transmission sample image to the client for display;
receiving an adjustment command, input by a user on the client, for a size of the at least one blind range area in the transmission sample image; and
determining the spatial compression range according to the adjustment command.

3. The VR image processing method according to claim 1, wherein
the preset subsampling factor is 2.

4. The VR image processing method according to claim 1 or claim 3, wherein while performing video encoding on the first compressed video image to obtain a transmission video image, the method further comprises:
saving the video image and recording the spatial compression range and a compression ratio of the first compressed video image in a customized information frame of the video image, wherein the compression ratio equals to the preset subsampling factor.

5. The VR image processing method according to claim 4, wherein the video encoding is h264 or h265 video encoding.

6. A Virtual Reality, VR, image processing method performed by a client, comprising
receiving from a server a transmission sample image, which is an image marked with at least one blind range area whose size is adjustable by a command from a user of the client so that the at least one blind range area exits the field of view of the user,
receiving a transmission video image from the server, wherein the transmission video image is obtained by performing the VR image processing method according to any of claims 1-6 by the server;
performing video decoding on the transmission video image to restore the transmission video image into a second compressed video image; and
decompressing (S140) the second compressed video image to obtain a display video image.

7. The VR image processing method according to claim 6, wherein determining the spatial compression range by the transmission sample image comprises
enabling, through a guidance program, both eyes of a user to respectively correspond to the left lens barrel and the right lens barrel of the client;
capturing the transmission sample image marked with at least one blind range area, sent by the server, through the left lens barrel and the right lens barrel;
receiving an adjustment command which is input by the user to adjust a size of the at least one blind range area in the transmission sample image so that the at least one blind range area exits a field of view of the user; and
sending the adjustment command to the server, wherein the adjustment command is used for determining the spatial compression range.

8. The VR image processing method according to claim 6 or claim 7, wherein the second compressed video has a same resolution as the first compressed video.

9. The VR image processing method according to claim 8, wherein decompressing the second compressed video image to obtain a display video image comprises:
obtaining a compressed part and an original part of the second compressed video image, wherein the compressed part is identical to the compressed edge area, and the original part is identical to the center restoration area;
performing differential sampling for the compressed part by a second image shader program to restore the compressed part to a true edge area, and performing point-to-point sampling for the original part to obtain a true center area, wherein the differential sampling is configured to restore the compressed part to original size; and
fitting the true edge area and the true center area to obtain the display video image.

10. A Virtual Reality, VR, image compression transmission system (100), comprising a server and a client, wherein
the server is configured to implement the VR image processing method according to any of claims 1-5,
the client is configured to implement the VR image processing method according to any of claims 6-9, and
a transmission sample image, which is an image marked with at least one blind range area whose size is adjustable by a command from a user of the client so that the at least one blind range area exits the field of view of the user, is sent by the server to the client.

11. The VR image compression transmission system according to claim 10,
wherein the server comprises:
an edge compression module (101), configured to obtain a video image to be sent by the server and perform resolution localized compression on the video image according to a spatial compression range to obtain a first compressed video image, wherein the spatial compression range defines an edge area within the video image in which resolution is to be reduced and the spatial compression range is determined by the transmission sample image; and
a video encoding module (102), configured to perform video encoding on the first compressed video image to obtain a transmission video image;
and the client comprises: a video decoding module (103), configured to perform video decoding on the transmission video image to restore the transmission video image into a second compressed video image; and
a video restoration module (104), configured to decompress the second compressed video image to obtain a display video image.

12. The VR image compression transmission system according to claim 11, wherein the edge compression module comprises an image shader, wherein
a first image shader program is provided in the image shader, and the first image shader program is configured to subsample the edge area divided according to the spatial compression range with a preset subsampling factor to reduce the resolution of the edge area, thereby obtaining a compressed edge area.

13. A computer readable storage medium, wherein the computer readable storage medium stores a computer program, and the computer program, when executed by a processor, implements the method according to any of claims 1-9.

14. An electronic device, comprising a memory and a processor, where a computer program is stored in the memory, and the processor is configured to run the computer program to perform the method according to any of claims 1-9.

## Patentansprüche

1. Virtuelle-Realität-, VR, Bildverarbeitungsverfahren, das von einem Server durchgeführt wird, umfassend:
Erhalten eines Videobilds, das von dem Server gesendet wird;
Durchführen einer lokalisierten Auflösungskomprimierung an dem Videobild gemäß einem räumlichen Komprimierungsbereich, um ein erstes komprimiertes Videobild zu erhalten, wobei der räumliche Komprimierungsbereich eine Randfläche innerhalb des Videobilds definiert, in dem die Auflösung reduziert werden soll, und der räumliche Komprimierungsbereich durch ein Übertragungsmusterbild bestimmt wird, das ein mit mindestens einer Blindbereichsfläche markiertes Bild ist, deren Größe durch einen Befehl eines Benutzers eines Clients so angepasst werden kann, dass die mindestens eine Blindbereichsfläche das Sichtfeld des Benutzers verlässt;
Durchführen (S120) von Videocodierung an dem ersten komprimierten Videobild, um ein Übertragungsvideobild zu erhalten; und
Übertragen des Übertragungsvideobilds an den Client,
wobei das Durchführen lokalisierter Auflösungskomprimierung an dem Videobild gemäß einem räumlichen Komprimierungsbereich, um ein erstes komprimiertes Videobild zu erhalten, umfasst:
Aufteilen des Videobilds in eine Randfläche und eine Mittelfläche gemäß dem räumlichen Komprimierungsbereich;
Unterabtasten der Randfläche mit einem voreingestellten Unterabtastfaktor durch ein erstes Bild-Shaderprogramm, um die Auflösung der Randfläche zu reduzieren. wodurch eine komprimierte Randfläche erhalten wird, und Durchführen einer Punkt-zu-Punkt-Abtastung für die Mittelfläche, um eine mittige Wiederherstellungsfläche zu erhalten; und
Verwenden der komprimierten Randfläche und der mittigen Wiederherstellungsfläche als das erste komprimierte Videobild.

2. VR-Bildverarbeitungsverfahren nach Anspruch 1, wobei ein Prozess zum Bestimmen des räumlichen Kompressionsbereichs anhand des Übertragungsmusterbilds umfasst:
Senden des Übertragungsmusterbilds zur Anzeige an den Client;
Empfangen eines von einem Benutzer auf dem Client eingegebenen Anpassungsbefehls für eine Größe mindestens einer Blindbereichsfläche im Übertragungsmusterbild; und
Bestimmen des räumlichen Komprimierungsbereichs gemäß dem Anpassungsbefehl.

3. VR-Bildverarbeitungsverfahren nach Anspruch 1, wobei der voreingestellte Unterabtastfaktor 2 ist.

4. VR-Bildverarbeitungsverfahren nach Anspruch 1 oder Anspruch 3, wobei das Verfahren beim Durchführen von Videocodierung an dem ersten komprimierten Videobild, um ein Übertragungsvideobild zu erhalten, ferner umfasst:
Speichern des Videobilds und Aufzeichnen des räumlichen Komprimierungsbereichs und eines Komprimierungsverhältnisses des ersten komprimierten Videobilds in einem benutzerdefinierten Informationsrahmen des Videobilds, wobei das Kompressionsverhältnis dem voreingestellten Unterabtastfaktor entspricht.

5. VR-Bildverarbeitungsverfahren nach Anspruch 4, wobei die Videocodierung h264- oder h265-Videocodierung ist.

6. Virtuelle-Realität-, VR, Bildverarbeitungsverfahren, das von einem Client durchgeführt wird, umfassend Empfangen, von einem Server, eines Übertragungsmusterbilds, das ein mit mindestens einer Blindbereichsfläche markiertes Bild ist, dessen Größe durch einen Befehl eines Benutzers des Clients so angepasst werden kann, dass die mindestens eine Blindbereichsfläche das Sichtfeld des Benutzers verlässt,
Empfangen eines Übertragungsvideobilds vom Server, wobei das Übertragungsvideobild durch Durchführen des VR-Bildverarbeitungsverfahrens nach einem der Ansprüche 1-6 durch den Server erhalten wird;
Durchführen von Videodecodierung an dem Übertragungsvideobild, um das Übertragungsvideobild in ein zweites komprimiertes Videobild umzuwandeln; und
Dekomprimieren (S140) des zweiten komprimierten Videobildes, um ein Anzeigevideobild zu erhalten.

7. VR-Bildverarbeitungsverfahren nach Anspruch 6, wobei Bestimmen des räumlichen Kompressionsbereichs anhand des Übertragungsmusterbilds umfasst
Ermöglichen, durch ein Anleitungsprogramm, beider Augen eines Benutzers, dem linken Objektivtubus beziehungsweise dem rechten Objektivtubus des Clients zu entsprechen;
Aufnehmen des mit mindestens einer Blindbereichsfläche markierten Übertragungsmusterbilds, das von dem Server gesendet wird, durch den linken Objektivtubus und den rechten Objektivtubus;
Empfangen eines Anpassungsbefehls, der vom Benutzer eingegeben wurde, um eine Größe der mindestens einen Blindbereichsfläche in dem Übertragungsmusterbild so anzupassen, dass die mindestens eine Blindbereichsfläche ein Sichtfeld des Benutzers verlässt; und
Senden des Anpassungsbefehls an den Server, wobei der Anpassungsbefehl zum Bestimmen des räumlichen Komprimierungsbereichs verwendet wird.

8. VR-Bildverarbeitungsverfahren nach Anspruch 6 oder Anspruch 7, wobei das zweite komprimierte Video eine gleiche Auflösung wie das erste komprimierte Video aufweist.

9. VR-Bildverarbeitungsverfahren nach Anspruch 8, wobei Dekomprimieren des zweiten komprimierten Videobilds, um ein Anzeigevideobild zu erhalten, umfasst:
Erhalten eines komprimierten Teils und eines ursprünglichen Teils des zweiten komprimierten Videobilds, wobei der komprimierte Teil mit der komprimierten Randfläche identisch ist und der ursprüngliche Teil mit der mittigen Wiederherstellungsfläche identisch ist;
Durchführen differentieller Abtastung für den komprimierten Teil durch ein zweites Bild-Shaderprogramm, um den komprimierten Teil zu einer echten Randfläche wiederherzustellen, und Durchführen von Punkt-zu-Punkt-Abtastung für den ursprünglichen Teil, um eine echte Mittelfläche zu erhalten, wobei die differentielle Abtastung so konfiguriert ist, dass der komprimierte Teil auf seine ursprüngliche Größe wiederhergestellt wird; und
Anpassen der echten Randfläche und der echten Mittelfläche, um das Anzeigevideobild zu erhalten.

10. Virtuelle-Realität-, VR, Bildkomprimierungsübertragungssystem (100), umfassend einen Server und einen Client, wobei
der Server so konfiguriert ist, dass er das VR-Bildverarbeitungsverfahren nach einem der Ansprüche 1-5 implementiert,
der Client so konfiguriert ist, dass er das VR-Bildverarbeitungsverfahren nach einem der Ansprüche 6-9 implementiert, und
ein Übertragungsmusterbild, das ein mit mindestens einer Blindbereichsfläche markiertes Bild ist, dessen Größe durch einen Befehl eines Benutzers des Clients so angepasst werden kann, dass die mindestens eine Blindbereichsfläche das Sichtfeld des Benutzers verlässt, von dem Server an den Client gesendet wird.

11. VR-Bildkomprimierungsübertragungssystem nach Anspruch 10,
wobei der Server umfasst:
ein Randkomprimierungsmodul (101), das so konfiguriert ist, dass es ein von dem Server gesendetes Videobild erhält und lokalisierte Auflösungskomprimierung an dem Videobild gemäß einem räumlichen Komprimierungsbereich durchführt, um ein erstes komprimiertes Videobild zu erhalten, wobei der räumliche Komprimierungsbereich eine Randfläche innerhalb des Videobilds definiert, in dem die Auflösung reduziert werden soll, und der räumliche Komprimierungsbereich durch das Übertragungsmusterbild bestimmt wird; und
ein Videocodierungsmodul (102), das so konfiguriert ist, dass es Videocodierung an dem ersten komprimierten Videobild durchführt, um ein Übertragungsvideobild zu erhalten;
und der Client umfasst: ein Videodecodierungsmodul (103), das so konfiguriert ist, dass es Videodecodierung an dem Übertragungsvideobild durchführt, um das Übertragungsvideobild in ein zweites komprimiertes Videobild umzuwandeln; und
ein Videowiederherstellungsmodul (104), das so konfiguriert ist, dass es das zweite komprimierte Videobild dekomprimiert, um ein Anzeigevideobild zu erhalten.

12. VR-Bildkomprimierungsübertragungssystem nach Anspruch 11, wobei das Randkomprimierungsmodul einen Bild-Shader umfasst, wobei
ein erstes Bild-Shaderprogramm im Bild-Shader bereitgestellt ist und das erste Bild-Shaderprogramm so konfiguriert ist, dass es die Randfläche, die gemäß dem räumlichen Komprimierungsbereich aufgeteilt ist, mit einem voreingestellten Unterabtastfaktor unterabtastet, um die Auflösung der Randfläche zu reduzieren, wodurch eine komprimierte Randfläche erhalten wird.

13. Computerlesbares Speichermedium, wobei das computerlesbare Speichermedium ein Computerprogramm speichert, und das Computerprogramm, wenn es von einem Prozessor ausgeführt wird, das Verfahren nach einem der Ansprüche 1-9 implementiert.

14. Elektronische Vorrichtung, umfassend einen Speicher und einen Prozessor, wobei ein Computerprogramm in dem Speicher gespeichert ist und der Prozessor so konfiguriert ist, dass er das Computerprogramm abspielt, um das Verfahren nach einem der Ansprüche 1-9 durchzuführen.

## Revendications

1. Procédé de traitement d'images de réalité virtuelle, VR, exécuté par un serveur, comprenant :
l'obtention d'une image vidéo à envoyer par le serveur ;
la réalisation d'une compression localisée de résolution sur l'image vidéo selon une plage de compression spatiale pour obtenir une première image vidéo compressée, dans lequel la plage de compression spatiale définit une zone de bord au sein de l'image vidéo dans laquelle la résolution doit être réduite et la plage de compression spatiale est déterminée par une image d'échantillon de transmission, qui est une image marquée d'au moins une zone de plage aveugle dont la taille est ajustable par une instruction provenant d'un utilisateur d'un client de sorte que la au moins une zone de plage aveugle sorte du champ de vision de l'utilisateur ;
la réalisation d'un codage vidéo (S120) sur la première image vidéo compressée afin d'obtenir une image vidéo de transmission ; et
la transmission de l'image vidéo de transmission au client,
dans lequel la compression localisée de résolution effectuée sur l'image vidéo selon une plage de compression spatiale pour obtenir une première image vidéo compressée comprend :
la division de l'image vidéo en une zone de bord et une zone centrale selon la plage de compression spatiale ;
le sous-échantillonnage de la zone de bord avec un facteur de sous-échantillonnage prédéfini par un premier programme d'ombrage d'image afin de réduire la résolution de la zone de bord, en obtenant ainsi une zone de bord compressée, et la réalisation d'un véritable échantillonnage point à point pour la zone centrale afin d'obtenir une zone de restauration centrale ; et
l'utilisation de la zone de bord compressée et de la zone de restauration centrale comme première image vidéo compressée.

2. Procédé de traitement d'image VR selon la revendication 1, dans lequel un processus de détermination de la plage de compression spatiale par l'image d'échantillon de transmission comprend :
l'envoi de l'image d'échantillon de transmission au client pour affichage ;
la réception d'une instruction d'ajustement, saisie par un utilisateur sur le client, pour la taille de la au moins une zone aveugle dans l'image d'échantillon de transmission ; et
la détermination de la plage de compression spatiale selon l'instruction d'ajustement.

3. Procédé de traitement d'image VR selon la revendication 1, dans lequel le facteur de sous-échantillonnage prédéfini est de 2.

4. Procédé de traitement d'image VR selon la revendication 1 ou la revendication 3, dans lequel, tout en effectuant le codage vidéo sur la première image vidéo compressée pour obtenir une image vidéo de transmission, le procédé comprend en outre :
la sauvegarde de l'image vidéo et l'enregistrement de la plage de compression spatiale ainsi que d'un taux de compression de la première image vidéo compressée dans une trame d'information personnalisée de l'image vidéo, dans lequel le taux de compression est égal au facteur de sous-échantillonnage prédéfini.

5. Procédé de traitement d'image VR selon la revendication 4, dans lequel le codage vidéo est un codage vidéo h264 ou h265.

6. Procédé de traitement d'image de réalité virtuelle, VR, exécuté par un client, comprenant la réception à partir d'un serveur d'une image d'échantillon de transmission, qui est une image marquée d'au moins une zone aveugle dont la taille est ajustable par une instruction provenant d'un utilisateur du client de sorte que la au moins une zone aveugle sorte du champ de vision de l'utilisateur,
la réception d'une image vidéo de transmission provenant du serveur, dans lequel l'image vidéo de transmission est obtenue en effectuant le procédé de traitement d'image VR selon l'une quelconque des revendications 1-6 par le serveur ;
la réalisation d'un décodage vidéo de l'image vidéo transmise afin de restaurer l'image vidéo de transmission dans une seconde image vidéo compressée ; et
la décompression (S140) de la seconde image vidéo compressée pour obtenir une image vidéo d'affichage.

7. Procédé de traitement d'image VR selon la revendication 6, dans lequel la détermination de la plage de compression spatiale par l'image d'échantillon de transmission comprend :
le fait de permettre, grâce à un programme de guidage, de faire correspondre respectivement les deux yeux d'un utilisateur au barillet de l'objectif gauche et au barillet de l'objectif droit du client ;
la capture de l'image d'échantillon de transmission marquée d'au moins une zone de plage aveugle, envoyée par le serveur, à travers le barillet de l'objectif gauche et le barillet de l'objectif droit ;
la réception d'une instruction d'ajustement saisie par l'utilisateur pour ajuster la taille de la au moins une zone aveugle dans l'image d'échantillon de transmission afin que la au moins une zone aveugle sorte du champ de vision de l'utilisateur ; et
l'envoi de l'instruction d'ajustement au serveur, dans lequel l'instruction d'ajustement est utilisée pour déterminer la plage de compression spatiale.

8. Procédé de traitement d'image VR selon la revendication 6 ou la revendication 7, dans lequel la seconde vidéo compressée présente la même résolution que la première vidéo compressée.

9. Procédé de traitement d'image VR selon la revendication 8, dans lequel la décompression de la seconde image vidéo compressée pour obtenir une image vidéo d'affichage comprend :
l'obtention d'une partie compressée et d'une partie originale de la seconde image vidéo compressée, dans lequel la partie compressée est identique à la zone de bord compressée et la partie originale est identique à la zone de restauration centrale ;
la réalisation d'un échantillonnage différentiel de la partie compressée par un second programme d'ombrage d'image afin de restaurer la partie compressée à une véritable zone de bord, et la réalisation d'un échantillonnage point à point de la partie originale afin d'obtenir une véritable zone centrale, dans lequel l'échantillonnage différentiel est configuré pour restaurer la partie compressée à sa taille originale ; et
l'ajustement de la véritable zone de bord et de la véritable la zone centrale pour obtenir l'image vidéo d'affichage.

10. Système (100) de transmission et de compression d'image de réalité virtuelle, VR, comprenant un serveur et un client, dans lequel
le serveur est configuré pour mettre en œuvre le procédé de traitement d'image VR selon l'une quelconque des revendications 1-5,
le client est configuré pour mettre en œuvre le procédé de traitement d'image VR selon l'une quelconque des revendications 6-9, et
une image d'échantillon de transmission, qui est une image marquée d'au moins une zone aveugle dont la taille est ajustable par une instruction provenant d'un utilisateur du client de sorte que la au moins une zone aveugle sorte du champ de vision de l'utilisateur, est envoyée par le serveur au client.

11. Système de transmission et de compression d'image VR selon la revendication 10,
dans lequel le serveur comprend :
un module de compression de bord (101), configuré pour obtenir une image vidéo à envoyer par le serveur et effectuer une compression localisée de résolution sur l'image vidéo selon une plage de compression spatiale afin d'obtenir une première image vidéo compressée, dans lequel la plage de compression spatiale définit une zone de bord au sein de l'image vidéo dans laquelle la résolution doit être réduite et la plage de compression spatiale est déterminée par l'image d'échantillon de transmission ; et
un module de codage vidéo (102), configuré pour effectuer un codage vidéo sur la première image vidéo compressée afin d'obtenir une image vidéo de transmission ;
et le client comprend : un module de décodage vidéo (103), configuré pour effectuer le décodage vidéo de l'image vidéo de transmission afin de restaurer l'image vidéo de transmission dans une seconde image vidéo compressée ; et
un module de restauration vidéo (104), configuré pour décompresser la seconde image vidéo compressée afin d'obtenir une image vidéo d'affichage.

12. Système de transmission et de compression d'image VR selon la revendication 11, dans lequel le module de compression de bord comprend un ombrage d'image, dans lequel
un premier programme d'ombrage d'image est fourni dans l'ombrage d'image, et le premier programme d'ombrage d'image est configuré pour sous-échantillonner la zone de bord divisée selon la plage de compression spatiale avec un facteur de sous-échantillonnage prédéfini afin de réduire la résolution de la zone de bord, en obtenant ainsi une zone de bord compressée.

13. Support de stockage lisible par ordinateur, dans lequel le support de stockage lisible par ordinateur stocke un programme informatique, et le programme informatique, lorsqu'il est exécuté par un processeur, met en œuvre le procédé selon l'une quelconque des revendications 1-9.

14. Dispositif électronique, comprenant une mémoire et un processeur, dans lequel un programme informatique est stocké dans la mémoire, et le processeur est configuré pour exécuter le programme informatique pour effectuer le procédé selon l'une quelconque des revendications 1-9.
